(19) Europäisches Patentamt
European Patent Office
Office européen des brevets

(11) EP 3 167 500 B1

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **15735964.7**

(22) Anmeldetag: **09.07.2015**

(51) Int Cl.:
***H01M 4/24*** *(2006.01)* ***H01M 4/583*** *(2010.01)*
***H01M 10/24*** *(2006.01)* ***H01M 10/30*** *(2006.01)*
***H01M 10/34*** *(2006.01)* ***H01M 10/52*** *(2006.01)*
***H01M 12/00*** *(2006.01)* ***H01M 4/32*** *(2006.01)*
***H01M 4/52*** *(2010.01)* ***H01M 10/44*** *(2006.01)*
*H01G 11/30 (2013.01)* *H01M 4/48 (2010.01)*
*H01M 10/26 (2006.01)* *H01M 4/38 (2006.01)*
*H01M 4/36 (2006.01)* *H01M 10/42 (2006.01)*

(86) Internationale Anmeldenummer:
**PCT/EP2015/065766**

(87) Internationale Veröffentlichungsnummer:
**WO 2016/005529 (14.01.2016 Gazette 2016/02)**

(54) **SEKUNDÄRE ELEKTROCHEMISCHE ZELLE**

SECONDARY ELECTROCHEMICAL CELL

CELLULE ÉLECTROCHIMIQUE SECONDAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2014 EP 14176415**
**13.11.2014 DE 102014223194**

(43) Veröffentlichungstag der Anmeldung:
**17.05.2017 Patentblatt 2017/20**

(73) Patentinhaber: **VARTA Microbattery GmbH**
**73479 Ellwangen Jagst (DE)**

(72) Erfinder:
- **SCHULA, Claudio**
**73479 Ellwangen (DE)**
- **SCHOLZ, Stefanie**
**73479 Ellwangen (DE)**
- **PYTLIK, Edward**
**73479 Ellwangen (DE)**
- **ENSLING, David**
**73479 Ellwangen (DE)**

(74) Vertreter: **Patentanwaltskanzlei Cartagena Partnerschaftsgesellschaft Klement, Eberle mbB**
**Urbanstraße 53**
**70182 Stuttgart (DE)**

(56) Entgegenhaltungen:
**EP-A1- 0 419 220**
**WO-A2-03/088374**
**JP-A- 2012 064 590**
**US-A1- 2006 201 801**
**US-H- H 457**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 167 500 B1

## Beschreibung

Die vorliegende Erfindung betrifft eine sekundäre elektrochemische Zelle.

Elektrochemische Zellen auf Basis von Nickel / Eisen sind in Form des Nickel-Eisen-Akkumulators (Edison-Akkumulator) bereits seit langem bekannt. Die Elektrodenreaktionen beim Laden und Entladen eines elektrochemischen Elements auf Basis von Nickel / Eisen lassen sich durch folgende Gleichungen beschreiben:

Laden

$$2\ Ni(OH)_2 + 2\ OH^- \rightarrow 2\ NiO(OH) + 2\ H_2O + 2\ e^-$$

$$Fe(OH)_2 + 2\ e^- \rightarrow Fe + 2\ OH^-$$

[Gleichung 1]

Entladen

$$2\ NiO(OH) + 2\ H_2O + 2\ e^- \rightarrow 2\ Ni(OH)_2 + 2\ OH^-$$

$$Fe + 2\ OH^- \rightarrow Fe(OH)_2 + 2\ e^-$$

[Gleichung 2]

Als Elektrolyt dient in der Regel Kalilauge.

Nickel-Eisen-Akkumulatoren sind sehr zuverlässig und langlebig, als Quellen für Pulsströme hoher Intensität eignen sie sich in der Regel aber nicht. Hierfür besser geeignete Akkumulatoren in Form von wieder aufladbaren Nickel-Metallhydrid-Batterien sind beispielsweise in der EP 1 011 163 A1 beschrieben. Die Elektrodenreaktionen beim Laden und Entladen von Nickel-Metallhydrid-Batterien lassen sich durch folgende Gleichungen beschreiben:

Laden

$$Ni(OH)_2 + OH^- \rightarrow NiO(OH) + H_2O + e^-$$

$$M + H_2O + e^- \rightarrow M\text{-}H + OH^-$$

[Gleichung 3]

Entladen

$$NiO(OH) + H_2O + e^- \rightarrow Ni(OH)_2 + OH^-$$

$$M\text{-}H + OH^- \rightarrow M + H_2O + e^-$$

[Gleichung 4]

Auch hier dient häufig Kalilauge als Elektrolyt.

Die in der EP 1 011 163 A1 beschriebenen Nickel-Metallhydrid-Batterien eignen sich zum Absichern flüchtiger Speicher von Datenverarbeitungseinrichtungen, eine Applikation, bei der starke Ströme innerhalb sehr kurzer Zeit bereitgestellt werden müssen.

Als Energiequelle zur Absicherung flüchtiger Speicher von Datenverarbeitungseinrichtungen können auch Kondensatoren, insbesondere sogenannte Doppelschichtkondensatoren ("supercaps"), dienen. Ein Beispiel hierfür findet sich in der DE 20 2004 017 545 U1. Doppelschichtkondensatoren haben den Vorteil, dass sie sehr schnell sehr hohe Pulsströme liefern können. Ihre Kapazität ist allerdings entsprechend der Natur eines Kondensators begrenzt. Darüber hinaus weisen die meisten Doppelschichtkondensatoren ein organisches Elektrolytsystem auf, das bei einer Überladung ein Sicherheitsrisiko darstellen kann.

Die in der EP 1 011 163 A1 beschriebenen Batterien weisen eine deutlich höhere Kapazität auf als Doppelschichtkondensatoren. Allerdings können die in Datenverarbeitungseinrichtungen im Betrieb vorherrschenden relativ hohen Temperaturen leicht zu einer Überladung führen. Ein Sicherheitsrisiko ist damit in der Regel nicht verbunden.

Allerdings kann die Überladung zu einer Verringerung der Lebenserwartung der Batterien führen. Weitere aus dem Stand der Technik bekannte sekundäre elektrochemische Elemente sind in den Druckschriften JP 2012 064590 A, WO 03/088374 A2, EP 0 419 220 A1 und US 2006/201801 A1 beschrieben.

Der vorliegenden Erfindung lag die Aufgabe zugrunde, eine Energiequelle bereitzustellen, die Pulsströme hoher Intensität abgeben kann und die die angegebenen Nachteile des Standes der Technik nicht oder nur in abgeschwächter Form aufweist.

Diese Aufgabe wird gelöst durch die im Folgenden beschriebenen elektrochemischen Zellen, insbesondere auch durch die elektrochemische Zelle mit den Merkmalen des Anspruchs 1 (eine bevorzugte Ausführungsform der nachfolgend als Variante 1 beschriebenen Zellen). Bevorzugte Ausführungsformen der elektrochemischen Zelle gemäß Anspruch 1 sind in den abhängigen Ansprüchen 2 bis 6 angegeben. Der Wortlaut sämtlicher Ansprüche wird hiermit durch Bezugnahme zum Inhalt dieser Beschreibung gemacht.

Alle nachfolgend beschriebenen elektrochemischen Zellen weisen eine negative Elektrode, eine positive Elektrode, einen porösen Separator, der die negative und die positive Elektrode voneinander trennt, einen wässrigen alkalischen Elektrolyten, mit dem die Elektroden und der Separator getränkt sind und ein Gehäuse, das die Elektroden, den Separator und den Elektrolyten umschließt, auf. Die Zellen sind sekundäre elektrochemische Zellen. Mit anderen Worten, Lade- und Entladevorgänge sind reversibel.

Die negative Elektrode der elektrochemischen Zellen gibt es in mehreren Ausführungsformen:

Bei Zellen gemäß Variante 1 - Zur Ausbildung einer elektrischen Doppelschicht befähigte negative Elektrode
Die negative Elektrode umfasst einen Stromableiter sowie ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht.

Bei Zellen gemäß Variante 2 - Negative Elektrode mit Pseudokapazität
In dieser Ausführungsform umfasst die negative Elektrode neben einem Stromableiter und einem kohlenstoffbasierten Speichermaterial, das die Speicherung von elektrischer Ladung in der Elektrode durch Ausbildung der erwähnten elektrischen Doppelschicht ermöglicht, ein nicht kohlenstoffbasiertes Speichermaterial, das Wasserstoff chemisorbieren und/oder in Form eines Metallhydrids speichern kann (im Folgenden als H2-Speichermaterial bezeichnet).

Bei Zellen gemäß Variante 3 - Negative Elektrode mit Pseudokapazität
In dieser Ausführungsform umfasst die negative Elektrode neben einem Stromableiter und einem kohlenstoffbasierten Speichermaterial, das die Speicherung von elektrischer Ladung in der Elektrode durch Ausbildung der erwähnten elektrischen Doppelschicht ermöglicht, (und alternativ zu dem nicht kohlenstoffbasierten Speichermaterial gemäß Variante 2) Eisen in metallischer (Oxidationsstufe 0) und/oder oxidierter Form (Oxidationsstufe 2 oder 3). Wenn das Eisen oxidiert vorliegt, so liegt es bevorzugt als Eisenhydroxid in der Elektrode vor. Wie den eingangs dargestellten Gleichungen zu entnehmen ist, verschiebt sich beim Laden und Entladen das Gleichgewicht zwischen der oxidierten und der metallischen Form.

Beim Vorliegen einer Kombination aus dem kohlenstoffbasierten Speichermaterial und dem nicht kohlenstoffbasierten H2-Speichermaterial oder dem Eisen (Varianten 2 und 3) vermag die negative Elektrode elektrische Ladung nicht nur durch Ausbildung der erwähnten Doppelschicht zu speichern. Vielmehr kann elektrische Ladung auch chemisch auf dem Umweg über eine reversible Redoxreaktion gespeichert werden. Kurzum: In diesen Fällen kann die negative Elektrode pseudokapazitive Eigenschaften aufweisen.

Die positive Elektrode der elektrochemischen Zellen enthält in allen Fällen einen Stromableiter sowie weiterhin Nickelhydroxid ($Ni(OH)_2$) und/oder Nickeloxyhydroxid (NiO(OH)).

Beim Laden der positiven Elektrode wandelt sich Nickelhydroxid unter Aufnahme eines Hydroxid-Ions und unter Abgabe eines Wassermoleküls und Elektronen in Nickeloxyhydroxid um. Umgekehrt nimmt Nickeloxyhydroxid beim Entladen ein Elektron auf und wandelt sich mit Wasser unter Abgabe eines Hydroxid-Ions in Nickelhydroxid um. Theoretisch ist es somit möglich, dass eine positive Elektrode in vollständig geladenem Zustand ausschließlich Nickeloxyhydroxid aufweist und in vollständig entladenem Zustand ausschließlich Nickelhydroxid. In der Praxis liegen die beiden Verbindungen in Elektroden aber meist nebeneinander vor, wobei das Mengenverhältnis der Verbindungen zueinander vom Ladezustand der Elektroden abhängt.

Hilfselektrode

In bevorzugten Ausführungsformen können die Zellen in allen Varianten eine mit der jeweiligen negativen Elektrode elektrisch verbundene Hilfselektrode zum Abbau eines gegebenenfalls in einem Gehäuse der Zelle entstehenden Sauerstoffüberdrucks aufweisen. Derlei Hilfselektroden sind für andere elektrochemische Systeme bereits bekannt, beispielsweise wird in der EP 0 218 028 A1 eine Hilfselektrode für einen Nickel/Cadmium-Akkumulator beschrieben.

Bei der Hilfselektrode kann es sich beispielsweise um eine Dreischichtelektrode aus einer den Zutritt des Sauerstoffs begünstigenden, hydrophoben und elektrisch nicht leitenden ersten Schicht, einer hydrophilen zweiten Schicht und einer die katalytische Sauerstoffreduktion unterhaltenden, in elektrischem Kontakt zur negativen Hauptelektrode stehenden, hydrophoben dritten Schicht handeln. Eine solche Dreischichtelektrode ist aus der EP 0 416 244 A1 bekannt. Die dritte Schicht besteht demzufolge bevorzugt aus einer aktivkohlehaltigen Walzmischung (z.B. aus 50 Gew.% bis 80 Gew.% Aktivkohle, 3 Gew.% bis 20 Gew.% Leitruß und 10 Gew.% bis 30 Gew.% Polytetrafluorethylen (PTFE)). Der ersten und der zweiten Schicht liegt bevorzugt ein einlagiges Kunststofffaservlies zugrunde, auf dessen eine Seite eine wasserhaltige Celluloseäther-Mischung aufgebracht ist. Details hierzu finden sich in der EP 0 416 244 A1.

Besonders bevorzugt kann die Hilfselektrode auch als Einschichtelektrode ausgebildet sein. Zum Abbau eines gegebenenfalls in dem Gehäuse entstehenden Sauerstoffdrucks kann beispielsweise eine Mischung aus Aktivkohle, Ruß und Polytetrafluorethylen (PTFE) auf die negative Elektrode aufgebracht werden, beispielsweise als Schicht in einer Dicke im Bereich von 50 bis 100 $\mu$m.

In weiteren bevorzugten Ausführungsformen kann die Hilfselektrode neben den genannten Komponenten wie die jeweilige negative Elektrode, mit der sie elektrisch verbunden ist, auch einen Anteil an Eisen in metallischer und/oder oxidierter Form oder einen Anteil an dem nicht kohlenstoffbasierten H2-Speichermaterial aufweisen.

Die Hilfselektrode hat in der Zelle einen bifunktionellen Charakter. Zum einen kann sie, wie bereits erwähnt, zum Abbau eines gegebenenfalls in dem Gehäuse entstehenden Sauerstoffüberdrucks beitragen. Zum anderen ist sie aber, vor allem aufgrund des Anteils an Aktivkohle und Ruß, wie die negative Elektrode dazu in der Lage, elektrische Ladung zu speichern. Sie erhöht damit anodenseitig die Doppelschichtkapazität.

Es ist bevorzugt, dass die positive Elektrode der Zellen eine geringere absolute Kapazität aufweist als die negative Elektrode. Mit anderen Worten, die Kapazität der negativen Elektrode zur Aufnahme elektrischer Energie überschreitet bevorzugt die diesbezügliche Kapazität der positiven Elektrode. Dies gilt insbesondere, wenn die Zellen die erwähnte Hilfselektrode aufweisen. In diesem Fall ist es bevorzugt, dass die addierten absoluten Kapazitäten der negativen Elektrode und der Hilfselektrode die absolute Kapazität der positiven Elektrode überschreiten.

Vorzugsweise übersteigt die Kapazität der negativen Elektrode die der positiven Elektrode mindestens um den Faktor 1,1, bevorzugt um einen Faktor im Bereich von 1,1 bis 2,0. Bei einer Überladung der Zelle ist dadurch gewährleistet, dass es zur Bildung von Sauerstoff und nicht etwa von Wasserstoff kommt.

Gegenüber klassischen Nickel-Eisen Akkumulatoren und Nickel-Metallhydrid-Batterien weisen die hier beschriebenen Neuentwicklungen bereits ohne Vorhandensein der Hilfselektrode eine erhöhte Überladestabilität bei hohen Temperaturen auf. Mit der Hilfselektrode wird dieser Effekt noch verstärkt. Die erhöhte Überladestabilität der Zelle dürfte insbesondere auf das kohlenstoffbasierte Speichermaterial in der negativen Elektrode zurückzuführen sein, das zu einem Verzehr in Folge einer Überladung entstandenen Sauerstoffs beitragen kann.

In Folge der Überladestabilität ist es möglich, das Gehäuse der Zelle gas- und flüssigkeitsdicht auszubilden. Bevorzugt weisen Zellen mit einem solchen Gehäuse auch eine Hilfselektrode auf, wie sie oben beschrieben ist.

Unter einem gasdichten Verschluss soll vorliegend verstanden werden, dass in der Zelle gebildetes Gas im Normalbetrieb nicht aus dem Gehäuse entweichen kann. Das Gehäuse umfasst also in der Regel kein Mittel zu einer gezielten Entlüftung wie beispielsweise ein Ventil. Allerdings kann aus Sicherheitsgründen eine Berstmembran vorgesehen sein, die bei Überschreiten eines Druckschwellenwerts irreversibel zerstört wird.

Negative Elektrode

Erfindungsgemäß weist die negative Elektrode der elektrochemischen Zelle das kohlenstoffbasierte Speichermaterial in einem Anteil zwischen 90 und 99.9 Gew.% bezogen auf das Gesamtgewicht der negativen Elektrode im trockenen Zustand, abzüglich des Gewichts des Stromableiters auf. In nicht erfindungsgemäßen Ausführungsformen weist die negative Elektrode der elektrochemischen Zellen in allen Varianten das kohlenstoffbasierte Speichermaterial in einem Anteil von mindestens 5 Gew.-% auf.

In nicht erfindungsgemäßen Ausführungsformen kann die negative Elektrode das kohlenstoffbasierte Speichermaterial in einem Anteil von mehr als 5 Gew.-% enthalten. Besonders bevorzugt liegt dieser Anteil zwischen 5 Gew.-% und 100 Gew.-%, bevorzugt zwischen 5 Gew.-% und 90 Gew.-%, weiter bevorzugt zwischen 5 Gew.-% und 75 Gew.-%, insbesondere zwischen 5 Gew.-% und 50 Gew.-%. Innerhalb des letztgenannten Bereiches sind Gewichtsanteile zwischen 5 Gew.-% und 25 Gew.-%, insbesondere zwischen 5 Gew.-% und 15 Gew.-%, weiter bevorzugt. Der Bereich zwischen 5 Gew.-% und 100 Gew.-% kann selbstverständlich nur im Fall von Zellen gemäß Variante 1 bis zu seiner oberen Grenze ausgeschöpft werden. Alle übrigen der genannten abgeschlossenen Bereiche können für jedwede Variante bevorzugt sein. Besonders bevorzugt gelten sie allerdings für Zellen gemäß Variante 1.

An Stelle der im vorangehenden Absatz genannten Bereichsuntergrenzen kann die Untergrenze für den Anteil

an kohlenstoffbasiertem Speichermaterial in den genannten Bereichen auch 5,5 Gew.-%, bevorzugt 6 Gew.-%, insbesondere 6,5 Gew.-%, betragen.

Alle genannten Prozentangaben beziehen sich bevorzugt auf das Gesamtgewicht der negativen Elektrode in trockenem Zustand (also ohne Elektrolyt), abzüglich des Gewichts des Stromableiters, das nicht berücksichtigt wird.

Umfasst die negative Elektrode die Kombination aus dem kohlenstoffbasierten Speichermaterial und dem nicht kohlenstoffbasierten H2-Speichermaterial (Bei Zellen gemäß Variante 2), so beträgt der Anteil an dem H2-Speichermaterial in der negativen Elektrode in nicht erfindungsgemäßen Ausführungsformen vorzugsweise zwischen 25 Gew.-% und 95 Gew.-%, bevorzugt zwischen 50 Gew.-% und 95 Gew.-%, besonders bevorzugt zwischen 75 Gew.-% und 95 Gew.-%, insbesondere zwischen 85 Gew.-% und 95 Gew.-%. Wenn die negative Elektrode die Kombination aus dem kohlenstoffbasierten Speichermaterial und dem Eisen in metallischer (Oxidationsstufe 0) und/oder oxidierter Form (Oxidationsstufe 2 oder 3) gemäß Variante 3 umfasst, so beträgt der Anteil an dem Eisen in der negativen Elektrode in nicht erfindungsgemäßen Ausführungsformen vorzugsweise zwischen 25 Gew.-% und 95 Gew.-%, bevorzugt zwischen 50 Gew.-% und 95 Gew.-%, besonders bevorzugt zwischen 75 Gew.-% und 95 Gew.-%, insbesondere zwischen 85 Gew.-% und 95 Gew.-%.

Alle genannten Prozentangaben beziehen sich auch hier vorzugsweise auf das Gesamtgewicht der negativen Elektrode in trockenem Zustand (also ohne Elektrolyt), abzüglich des Gewichts des Stromableiters.

Als zur Ausbildung einer elektrischen Doppelschicht befähigtes kohlenstoffbasiertes Speichermaterial kommen bei Zellen aller Varianten insbesondere Aktivkohle und Graphen in Frage. Bei Aktivkohle handelt es sich bekanntlich um einen porösen, feinkörnigen Kohlenstoff mit einer sehr großen inneren Oberfläche. Besonders bevorzugt ist Aktivkohle, die

- eine BET-Oberfläche von mindestens 800 $m^2/g$, bevorzugt von mindestens 900 $m^2/g$ (jeweils bestimmt gemäß DIN ISO 9277)

und/oder

- einen Kapazitätswert von mindestens 60 F/g (bestimmt gemäß DIN IEC 62391)

aufweist.

Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome $sp^2$-hybridisiert sind. Graphen bietet die theoretisch größte mit Kohlenstoff erreichbare Oberfläche pro Gewichtseinheit und ist daher aktuell Gegenstand intensiver Untersuchungen im Zusammenhang mit der Entwicklung von Superkondensatoren. Sowohl Graphen als auch Aktivkohle sind darüber hinaus in der Lage, Wasserstoff zu speichern. Unter anderem diese Eigenschaft macht sie als Elektrodenaktivmaterial für die negative Elektrode der Zelle so interessant.

Selbstverständlich können Graphen und Aktivkohle auch in Kombination miteinander verwendet werden. Hierbei ist jedes Mischungsverhältnis denkbar.

Als H2-Speichermaterial kommen bevorzugt aus dem Bereich der Nickel-Metallhydrid-Batterien bekannte Wasserstoffspeicherlegierungen zum Einsatz. Zu erwähnen sind in diesem Zusammenhang insbesondere $AB_2$-Legierungen und $AB_5$-Legierungen. Weiterhin kommen Raney-Nickel (eine katalytisch aktive Nickel-Aluminium-Legierung) sowie elektrochemisch hochaktives metallisches Nickel (INCO Nickel) in Frage.

$AB_2$-Legierungen basieren in der Regel auf Titan und Nickel im effektiven Verhältnis 1:2. In der Praxis werden das Titan und das Nickel häufig teilweise durch einen oder mehrere Zusätze, insbesondere aus der Gruppe mit Chrom, Vanadium oder Zirkonium, ersetzt.

Bei $AB_5$-Legierungen handelt es sich meist um Mischungen aus Lanthan und Nickel im effektiven Verhältnis 1:5. In der Praxis werden das Lanthan und das Nickel häufig teilweise durch einen oder mehrere Zusätze, insbesondere aus der Gruppe mit Mangan, Nickel, Kupfer, Chrom, Aluminium, Kobalt, Zink, Zirkonium oder Cer, ersetzt.

Alternativ oder zusätzlich können an Stelle der erwähnten Legierungen oder zusätzlich zu diesen auch $A_2B_7$- oder $AB_3$-Legierungen verwendet werden. Auch diese Legierungstypen wurden bereits im Zusammenhang mit Nickel-Metallhydrid-Batterien diskutiert. Beispiele für Legierungen dieser Art sind beispielsweise $La_{16,3}Mg_{7,0}Ni_{65,1}Co_{11,6}$ ($A_2B_7$) oder $La_{0,7}Mg_{0,3}Ni_{3-x}Fe_x$ ($AB_3$ mit x = 0 - 0,4).

Das verwendete kohlenstoffbasierte Speichermaterial liegt bevorzugt in partikulärer Form, also pulverförmig, vor, Bei der Herstellung der negativen Elektroden (in allen Varianten) kommt es insbesondere in Form eines Pulvers mit einer mittleren Partikelgröße im Bereich von 50 nm bis 500 $\mu$m, insbesondere mit einer mittleren Partikelgröße im Bereich von 10 $\mu$m bis 50 $\mu$m, zum Einsatz.

Das verwendete H2-Speichermaterial und das Eisen (in oxidierter und reduzierter Form) liegen ebenfalls bevorzugt in partikulärer Form vor. Bei der Herstellung der negativen Elektroden gemäß den Varianten 2 und 3 kommen

das H2-Speichermaterial und das Eisen insbesondere in Form von Pulvern mit einer mittleren Partikelgröße im Bereich von 10 nm bis 100 μm, insbesondere mit einer mittleren Partikelgröße im Bereich von 10 nm bis 1 μm, zum Einsatz.

Positive Elektrode

Das Nickelhydroxid und/oder Nickeloxyhydroxid wird bevorzugt in Form von sphärischen Partikeln eingesetzt. Unabhängig davon kann es bevorzugt sein, dass die eingesetzten Partikel aus Nickelhydroxid und/oder Nickeloxyhydroxid eine Oberfläche aufweisen, die zumindest teilweise mit Kobalt beschichtet ist.

In nicht erfindungsgemäßen Ausführungsformen enthält die positive Elektrode das Nickelhydroxid und/oder das Nickeloxyhydroxid in einem Anteil zwischen 10 Gew.-% und 100 Gew.-%, bevorzugt zwischen 25 Gew.-% und 100 Gew.-%, insbesondere zwischen 50 Gew.-% und 100 Gew.-%. Diese Prozentangaben beziehen sich bevorzugt auf das Gesamtgewicht der positiven Elektrode in trockenem Zustand (also ohne Elektrolyt), abzüglich des Gewichts des enthaltenen Stromableiters.

Bevorzugte Ausführungsformen der Elektroden

Zur Herstellung besonders bevorzugter Ausführungsformen der negativen Elektrode von Zellen gemäß den Varianten 1 bis 3 werden im Fall von Variante 1 das kohlenstoffbasierte Speichermaterial, im Fall von Variante 2 das kohlenstoffbasierte Speichermaterial und das H2-Speichermaterial und im Fall von Variante 3 das kohlenstoffbasierte Speichermaterial und das Eisen verarbeitet, beispielsweise als Paste. Den genannten Komponenten werden jedoch häufig noch eine oder mehrere weitere zusätzliche Komponenten zugesetzt. Entsprechend können die negative und die positive Elektrode von Zellen gemäß den Varianten 1 bis 3 neben den genannten Komponenten gegebenenfalls noch eine oder mehrere zusätzliche Komponenten aufweisen. Auf diese zusätzlichen Komponenten wird im Folgenden noch detailliert eingegangen. Für die negative Elektrode von Zellen aller Varianten kommt insbesondere mindestens eine der folgenden zusätzlichen Komponenten in den folgenden Anteilen in Frage:

- 0,1 Gew.-% bis 10 Gew.-%, bevorzugt 1 Gew.-% bis 5 Gew.-%, eines Elektrodenbinders
- 0,1 Gew.-% bis 10 Gew.-%, bevorzugt 1 Gew.-% bis 5 Gew.-%, eines Leitmittels

Diese zusätzlichen Komponenten können der negativen Elektrode einzeln oder in Kombination zugesetzt sein.

Wenn die negative Elektrode weder einen Anteil an dem H2-Speichermaterial noch einen Anteil an dem Eisen enthält (Variante 1), so umfasst sie besonders bevorzugt die folgenden Komponenten in den folgenden Anteilen:

- zwischen 90 Gew.-% und 99,9 Gew.-%, insbesondere zwischen 95 Gew.-% und 99,9 Gew.-%, des kohlenstoffbasierten Speichermaterials

- zwischen 0,1 Gew.-% und 10 Gew.-%, bevorzugt zwischen 0,1 Gew.-% und 5 Gew.-%, des Elektrodenbinders

Beim Vorliegen einer Kombination aus dem kohlenstoffbasierten Speichermaterial und dem nicht kohlenstoffbasierten H2-Speichermaterial (Variante 2) umfasst die negative Elektrode in einer nicht erfindungsgemäßen Weiterbildung besonders bevorzugt die folgenden Komponenten in den folgenden Anteilen:

- zwischen 75 Gew.-% und 94,9 Gew.-%, insbesondere zwischen 85 Gew.-% und 94,9 Gew.-%, des H2-Speichermaterials

- zwischen 5 Gew.-% und 19,9 Gew.-%, insbesondere zwischen 5 Gew.-% und 14,9 Gew.-%, des kohlenstoffbasierten Speichermaterials

- zwischen 0,1 Gew.-% und 10 Gew.-%, bevorzugt zwischen 0,1 Gew.-% und 5 Gew.-%, des Elektrodenbinders

Beim Vorliegen einer Kombination aus dem kohlenstoffbasierten Speichermaterial und dem Eisen (Variante 3) umfasst die negative Elektrode in ersten, nicht erfindungsgemäßen Weiterbildung besonders bevorzugt die folgenden Komponenten in den folgenden Anteilen

- zwischen 75 Gew.-% und 94,9 Gew.-%, insbesondere zwischen 85 Gew.-% und 94,9 Gew.-%, des Eisens

- zwischen 5 Gew.-% und 19,9 Gew.-%, insbesondere zwischen 5 Gew.-% und 14,9 Gew.-%, des kohlenstoffbasierten Speichermaterials

- zwischen 0,1 Gew.-% und 10 Gew.-%, bevorzugt zwischen 0,1 Gew.-% und 5 Gew.-%, des Elektrodenbinders

Für die positive Elektrode kommen insbesondere die folgenden zusätzlichen Komponenten in den folgenden Anteilen in Frage:

- Erfindungsgemäß 0,1 Gew.-% bis 10 Gew.-%, bevorzugt 1 Gew.-% bis 5 Gew.-%, eines Elektrodenbinders
- Erfindungsgemäß 0,1 Gew.-% bis 90 Gew.-%, bevorzugt 0,1 Gew.-% bis 50 Gew.-%, besonders bevorzugt 0,1 Gew.-% bis 40 Gew.-%, insbesondere 0,1 Gew.-% bis 20 Gew.-%, eines Leitmittels
- ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht, insbesondere in einem Anteil von 0,1 Gew.-% bis 20 Gew.-%

Diese Komponenten können der positiven Elektrode einzeln oder in Kombination zugesetzt sein.

In einer Weiterbildung umfasst die positive Elektrode besonders bevorzugt die folgenden Komponenten in den folgenden Anteilen:

- zwischen 50 Gew.-% und 99,8 Gew.-% Nickelhydroxid und/oder Nickeloxyhydroxid
- zwischen 0,1 Gew.-% und 40 Gew.-%, bevorzugt zwischen 0,1 Gew.-% und 45 Gew.-%, des Leitmittels
- zwischen 0,1 Gew.-% und 10 Gew.-%, bevorzugt zwischen 0,1 Gew.-% und 5 Gew.-%, des Elektrodenbinders

Bevorzugt gilt auch für all diese bevorzugten Ausführungsformen, dass sich diese Prozentangaben jeweils auf das Gesamtgewicht der positiven Elektrode und der negativen Elektrode in trockenem Zustand (also ohne Elektrolyt) beziehen, abzüglich des Gewichts des jeweiligen Stromableiters.

Weiterhin ist bevorzugt, dass sich in allen angegebenen sowie in allen aus obigen Angaben ableitbaren Zusammensetzungen für die positive und die negative Elektrode die Prozentanteile der jeweils enthaltenen Komponenten auf 100 Gew.-% addieren.

Bei dem Leitmittel handelt es sich bevorzugt um ein Metallpulver, insbesondere um Nickel- und/oder Kobaltpulver. Alternativ oder zusätzlich können auch kohlenstoffbasierte Leitmittel wie Ruß, Graphit, Kohlenstoffnanoröhrchen (CNTs), Nanokohlenstoffe oder im Fall der positiven Elektrode auch Graphen verwendet werden.

Als Elektrodenbinder wird bevorzugt ein zellulosebasierter Binder, beispielsweise Carboxymethylzellulose oder ein Derivat von Carboxymethylzellulose, verwendet. Besonders geeignet sind auch wasserlösliche Zelluloseether wie beispielsweise Methylhydroxyethylzellulose (MHEC), Methylhydroxypropylzellulose (MHPC) und Hydroxyethylzellulose (HEC). Alternativ kommen aber auch Polyacrylate oder kunststoffbasierte Binder wie zum Beispiel PTFE-Binder (PTFE = Polytetrafluorethylen) oder Binder auf Basis von SBR (Styrene-Butadiene-Rubber) in Frage.

Die Elektroden der Zellen müssen nicht zwingend einen Elektrodenbinder enthalten. Sie können beispielsweise auch binderfrei als Sinterelektroden oder als Presslinge gefertigt werden. Die positive Elektrode umfasst jedoch in erfindungsgemäßen Ausführungsformen 0,1 -10 Gew.-% eines Elektronenbinders.

Für das kohlenstoffbasierte Speichermaterial, das in bevorzugten Ausführungsformen in der positiven Elektrode enthalten sein kann, kommen die gleichen Materialien in Frage wie im Fall der negativen Elektrode. Dabei handelt es sich vor allem um Aktivkohle mit den oben genannten Eigenschaften und um Graphen.

Neben den genannten Zusätzen können die positive und/oder die negative Elektrode noch weitere Zusätze enthalten. Beispielhaft zu nennen sind in diesem Zusammenhang insbesondere Kobaltoxid, Kobalthydroxid, Eisensulfid, Kaliumsulfid, Zinksulfat, Ammoniumcarbonat oder Calziumhydroxid.

Stromableiter

In bevorzugten Ausführungsformen bildet der Stromableiter der positiven und/oder der negativen Elektrode eine dreidimensionale Leitmatrix, in die anodenseitig das jeweilige Speichermaterial und kathodenseitig das Nickelhydroxid und/oder das Nickeloxyhydroxid eingebettet ist.

In bevorzugten Ausführungsformen kommen auf Seite der positiven und/oder der negativen Elektrode als Stromableiter metallische oder metallbeschichtete offenporige Schäume oder Ableiter aus einem metallischen oder metallbeschichteten Vlies zum Einsatz. Derartige Ableiter kommen klassisch vor allem auf der Seite der positiven Elektrode von Nickel-Cadmium- oder Nickel-Metallhydrid-Akkumulatoren in Knopfzellenform zum Einsatz. Beispielhaft wird in diesem Zusammenhang auf die EP 0 658 949 A1 verwiesen. Sowohl die erwähnten Schäume als auch die erwähnten

Vliese sind kommerziell erhältlich. Bevorzugt bestehen sie aus Nickel oder Kupfer oder sind mit einem dieser Metalle beschichtet.

In einer besonders bevorzugten Ausführungsform kommt auf der Seite der negativen Elektrode ein eine dreidimensionale Leitmatrix bildender Stromableiter, insbesondere in Form eines Schaums oder eines Vlieses, zum Einsatz, der mit Kupfer beschichtet ist oder aus Kupfer besteht, während auf der Seite der positiven Elektrode eine dünne Folie aus Stahl oder Edelstahl, insbesondere aus mit Nickel beschichtetem Stahl oder Edelstahl, zum Einsatz kommt.

In einigen Ausführungsformen kann es bevorzugt sein, dass lediglich auf Seite der negativen Elektrode ein dreidimensionaler Ableiter aus dem erwähnten Schaum oder Vlies verwendet wird, während auf Seite der positiven Elektrode ein flacher, zweidimensionaler Ableiter, beispielsweise eine Metallfolie oder ein Metallnetz, zum Einsatz kommt. In diesem Fall werden die positiven Elektroden meist über ein Sinterverfahren hergestellt.

Natürlich kann es auch bevorzugt sein, auf Seite der positiven und/oder der negativen Elektrode an Stelle der dreidimensionalen Ableiter einen flachen, zweidimensionalen Ableiter, beispielsweise eine Metallfolie, einzusetzen.

Beim Vorliegen einer Kombination aus dem kohlenstoffbasierten Speichermaterial und dem nicht kohlenstoffbasierten H2-Speichermaterial (Variante 2) oder dem Eisen (Variante 3) liegen die Partikel aus dem kohlenstoffbasierten Speichermaterial und aus dem Eisen oder aus dem H2-Speichermaterial in der negativen Elektrode, in bevorzugten Ausführungsformen in der erwähnten dreidimensionalen Leitmatrix aus dem Stromableiter, bevorzugt in einer homogenen Verteilung vor. Zurückzuführen ist dies vor allem auf das erwähnte Mischen der jeweiligen Komponenten der negativen Elektrode. Zur Realisierung einer derartigen Anordnung können das H2-Speichermaterial oder das Eisen und das kohlenstoffbasierte Speichermaterial zu einer Mischung, insbesondere der bereits erwähnten Paste, verarbeitet werden, gegebenenfalls unter Hinzufügung mindestens einer der oben beschriebenen zusätzlichen Komponenten. Durch intensives Mischen der Komponenten wird gewährleistet, dass alle Komponenten der Mischung in gleichmäßiger, homogener Verteilung vorliegen. Anschließend wird die Mischung, insbesondere die Paste, in die erwähnte dreidimensionale Matrix aus einem Stromableiter eingebracht oder in Form einer dünnen Schicht auf einen zweidimensionalen Stromableiter aufgebracht.

In einigen Ausführungsformen kann es allerdings auch bevorzugt sein, dass die negative Elektrode einen ersten Teilbereich, insbesondere eine erste Schicht aufweist, in der das kohlenstoffbasierte Speichermaterial angereichert ist und entsprechend einen zweiten Teilbereich, insbesondere eine zweite Schicht, in der das nicht kohlenstoffbasierte H2-Speichermaterial oder das Eisen angereichert ist. Zur Realisierung einer derartigen Anordnung werden das H2-Speichermaterial oder das Eisen und das kohlenstoffbasierte Speichermaterial in der Regel nicht in einem Schritt verarbeitet. So ist es beispielsweise möglich,

- in einem ersten Schritt das H2-Speichermaterial oder das Eisen in die erwähnte dreidimensionale Matrix aus einem Stromableiter einzubringen und anschließend den Stromableiter auf seiner Außenseite mit dem kohlenstoffbasierten Speichermaterial zu beschichten

oder

- in einem ersten Schritt in einen bandförmigen Ableiter aus einem Nickelschaum das H2-Speichermaterial oder das Eisen einzubringen und anschließend auf einer oder sogar auf beiden Seiten des Bandes eine Schicht aus dem kohlenstoffbasierten Speichermaterial anzuordnen.

Bevorzugt kann die negative Elektrode der elektrochemischen Zelle also eine Mehrschichtstruktur, insbesondere eine Zweischichtstruktur, aufweisen. Dabei bilden z.B. der Stromableiter und das Eisen gemeinsam die erwähnte zweite Schicht, wohingegen das kohlenstoffbasierte Speichermaterial die erwähnte erste Schicht bildet.

Separator / Elektroden-Separator-Verbund

Sowohl der Separator als auch die positive und die negative Elektrode sind bevorzugt in Form von dünnen Schichten ausgebildet. Sie können beispielsweise in Form von Bändern oder flachen Streifen bereitgestellt werden. Im Falle der Elektroden sind Schichten mit einer Dicke im Bereich von 50 $\mu$m bis 500 $\mu$m bevorzugt. Die Dicke des verwendeten Separators liegt bevorzugt im Bereich von 10 $\mu$m bis 100 $\mu$m.

Bei dem Separator der elektrochemischen Zellen gemäß der Erfindung handelt es sich bevorzugt um eine poröse Kunststofffolie, insbesondere um eine Folie aus einem Polyolefin, aus PEEK (Polyetheretherketon) oder aus PES (Polyethersulfon). Es können ohne weiteres aber auch Separatoren aus Papier oder aus einem Vlies eingesetzt werden. Im Grunde ist lediglich erforderlich, dass der Separator eine ausreichende Porosität aufweist, um von dem Elektrolyten durchdrungen zu werden und dass er gegenüber diesem stabil ist.

Die Zellen liegen bevorzugt als Verbund mit der Schichtsequenz positive Elektrode / Separator / negative Elektrode vor. Besonders bevorzugt kann die elektrochemische Zelle in Form einer Bizelle vorliegen, also mit der Schichtsequenz positive Elektrode / Separator / negative Elektrode / Separator / positive Elektrode oder negative Elektrode / Separator / positive Elektrode / Separator / negative Elektrode.

Wenn die negative Elektrode, wie oben ausgeführt, eine erste Schicht aufweist, in der das kohlenstoffbasierte Speichermaterial angereichert ist, so ist es bevorzugt, dass diese Schicht zwischen der negativen Elektrode und einem benachbarten Separator angeordnet ist.

Die Elektroden der elektrochemischen Zelle werden bevorzugt kalandriert, bevor sie miteinander sowie mit dem Separator kombiniert werden.

Der Verbund mit der Schichtsequenz positive Elektrode / Separator / negative Elektrode liegt in einigen bevorzugten Ausführungsformen in Form eines spiralförmigen Wickels vor. Zu Herstellung eines solchen spiralförmigen Wickels können beispielsweise eine bandförmige positive Elektrode und eine bandförmige negative Elektrode mit zwei Separatorbändern mittels eines Laminations- oder Klebevorgangs zu einem Verbund der Sequenz Separator / negative Elektrode / Separator / positive Elektrode kombiniert und anschließend aufgewickelt werden.

Zellverbund / bipolare Anordnung

Aus mehreren der beschriebenen Zellen kann ein Zellverbund gebildet werden. Innerhalb des Verbundes können die Zellen parallel zueinander oder in Reihe geschaltet sein. Bei der Balancierung eines solchen Zellverbunds kann sich die erwähnte hohe Überladestabilität als besonders vorteilhaft erweisen. Um alle Zellen des Verbundes wieder auf ein identisches Spannungsniveau zu bringen, kann der Zellverbund gezielt überladen werden. Dies ist in aller Regel nicht möglich, ohne zumindest einzelne Zellen des Verbundes irreparabel zu schädigen. Aufgrund des kohlenstoffbasierten Speichermaterials in den negativen Elektroden der Zellen, das zum Verzehr von bei der Überladung erzeugtem Sauerstoff beitragen kann, ist vorliegend die Gefahr einer solchen Schädigung jedoch minimiert. Dies gilt insbesondere dann, wenn eine oder mehrere der Zellen, bevorzugt alle Zellen des Verbundes, die erwähnte Hilfselektrode aufweisen. Natürlich ist es auch möglich, mehrere elektrochemische Zellen aus positiver und negativer Elektrode sowie aus einem oder mehreren Separatoren übereinander zu stapeln. Ein möglicher Aufbau eines entsprechenden Stapels ist beispielsweise in der EP 1 011 163 A1 dargestellt.

In bevorzugten Ausführungsformen sind zwei oder mehr Zellen in einer bipolaren Anordnung miteinander kombiniert. Eine bipolare Anordnung elektrochemischer Zellen zeichnet sich dadurch aus, dass einzelne elektrochemische Zellen als Subzellen fungieren und durch leitende Zwischenwände in Reihe verschaltet sind. Jede Subzelle besitzt dabei eine positive und eine negative Elektrode, die durch einen elektrolytgetränkten Separator voneinander getrennt sind. Zwischen benachbarten Subzellen befindet sich eine Verbindungswand. Diese stellt eine elektrische Verbindung zwischen der positiven Elektrode der einen Zelle und der negativen Elektrode der anderen Zelle her. Gleichzeitig separiert sie die Elektrolyträume der Subzellen voneinander.

Gehäuse

Das Gehäuse der Zellen kann beispielsweise als Knopfzellengehäuse ausgebildet sein, insbesondere als Gehäuse, wie es in der bereits erwähnten EP 1 011 163 A1 dargestellt ist. Alternativ können die Zellen aber auch Flachzellen ausgebildet sein, wie sie beispielsweise in der EP 1 391 947 A1 beschrieben sind. In diesem Fall wird ihr Gehäuse aus dünnen Metallfolien gebildet, die über eine Siegelschicht miteinander verbunden sind.

Insbesondere, wenn der oben beschriebene Verbund mit der Schichtsequenz positive Elektrode / Separator / negative Elektrode in Form eines spiralförmigen Wickels vorliegt, kann das Gehäuse auch als zylindrisches Rundzellengehäuse ausgebildet sein.

Besonders bevorzugt handelt es sich bei dem Gehäuse der Zellen um ein metallisches Gehäuse, beispielsweise um ein Gehäuse aus Edelstahl oder aus einem vernickelten Stahl oder Edelstahl.

Elektrolyt

Der wässrige Elektrolyt der elektrochemischen Zellen weist bevorzugt im Bereich von 0,1 M bis 10 M mindestens einer gelöst vorliegenden Hydroxidverbindung auf. Besonders bevorzugt enthält der Elektrolyt als Hydroxidverbindung mindestens ein Metallhydroxid, insbesondere Natrium-, Lithium- oder Kaliumhydroxid.

Besonders bevorzugt enthält der Elektrolyt zusätzlich zu der Hydroxidverbindung mindestens eine Sulfatverbindung, insbesondere ein Alkali- oder Erdalkalisulfat. Bevorzugt ist die mindestens eine Sulfatverbindung in einer Konzentration im Bereich von 0,001 Gew.-% bis 0,1 Gew.-% in dem Elektrolyten enthalten.

In bevorzugten Ausführungsformen enthält der Elektrolyt ein sekundäres Leitsalz mit $PO_4^{3-}$, $NO3^-$ oder $Cl^-$ Anionen und metallischen Gegenionen.

Dem Elektrolyten können weiterhin auch Additive zugegeben werden wie beispielsweise Verdicker, Korrosionsinhibitoren, Netzmittel und Frostschutzmittel.

Besonders bevorzugt enthält der Elektrolyt als Additiv ein Nonylphenolethoxylat (NPEO). Allgemein bezeichnet man als NPEOs eine Gruppe nichtionischer Tenside, die sich von den Nonylphenolen ableiten und in der Anzahl der hydrophilen Ethoxy-Einheiten der Polyethylenglykol-Seitenkette unterscheiden. Besonders bevorzugt sind NPEOs der Formel

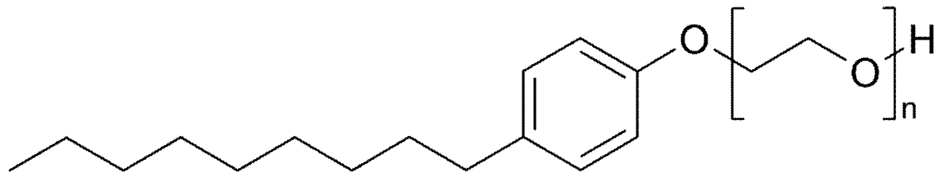

mit n = 1 bis 50, bevorzugt mit n = 1 - 25, besonders bevorzugt mit n = 1 bis 10, insbesondere mit n = 2 bis 6. Überraschenderweise hat man festgestellt, dass der Zusatz von NPEOs zu einer Verbesserung des Aktivierungsverhaltens, zu einer verbesserten Tieftemperaturperformance und ganz allgemein zu einer gesteigerten Leistungsfähigkeit der Elektroden von Zellen gemäß den Varianten 1 bis 3 führt. Besonders hervorzuheben sind weiterhin eine deutliche Verbesserung der Stabilität von Zellen mit alkalischem Elektrolyten. Als Additive scheinen NPEOs die Zersetzungsspannung von KOH zu erhöhen und dies bereits in relativ niedriger Konzentration.

Besonders bevorzugt ist das NPEO in einer Konzentration im Bereich von 0,001 Gew.-% bis 0,1 Gew.-% in dem Elektrolyten, bevorzugt im Bereich von 0,001 Gew.-% bis 0,1 Gew.-%, enthalten.

Spannungsfenster

Zellen gemäß Variante 1 weisen bevorzugt ein Spannungsfenster (Arbeitsbereich der Zellen im Regulärbetrieb) von 0 - 1,6 V auf.

Die Zellen aller Varianten zeigen ein hervorragendes Hochtemperaturverhalten. Eine Lagerung bei 105 °C für zwei Stunden überstehen die Zellen in der Regel problemlos (keine Schwellungen des Gehäuses oder gar Undichtigkeiten). Grundsätzlich ist auch eine Entladung bei diesen Temperaturen möglich.

Ausführungsbeispiele

(1) Herstellung einer elektrochemischen Zelle gemäß Variante 2 (nicht erfindungsgemäß)

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:

- 90 Gew.-% $Ni(OH)_2$,
- 4 Gew.-% Kobalt-Pulver als Leitmittel
- 4 Gew.-% Ruß als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:

- 7,5 Gew.-% Aktivkohle mit einer BET-Oberfläche > 900 $m^2/g$
- 90 Gew.-% einer $A_2B_7$-Legierung
- 2,5 Gew.-% eines wasserlöslichen Zelluloseethers als Binder

Die Elektroden wurden jeweils getrocknet und einem Walzvorgang unterworfen. Danach wiesen sie eine Dicke von ca. 250 $\mu$m auf.

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 $\mu$m bis 100 $\mu$m aufgewalzt. Die exakte Zusammensetzung lag bei 75 Gew.% Aktivkohle,

ca. 7,5 Gew.% Leitruß und ca. 17,5 Gew.% PTFE.

Anschließend wurden die Elektroden mit einem Separator aus Polypropylen (non-woven, Dicke 80 μm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung) und in einem Gehäuse aus vernickeltem Edelstahl verbaut, wie es in Fig. 1 dargestellt ist.

Die so hergestellte Zelle wies ein Spannungsfenster von 0,8 - 1,5 V auf.

(2) Herstellung einer elektrochemischen Zelle gemäß Variante 1

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:

- 50 Gew.-% $Ni(OH)_2$,
- 8 Gew.-% Ruß als Leitmittel
- 40 Gew.-% Graphit als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:

- 97,5 Gew.-% Aktivkohle mit einer BET-Oberfläche > 900 $m^2/g$
- 2,5 Gew.-% eines wasserlöslichen Zelluloseethers als Binder

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 μm bis 100 μm aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 μm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung) und in einem Gehäuse aus vernickeltem Edelstahl verbaut, wie es in Fig. 1 dargestellt ist. Die so hergestellte Zelle wies ein Spannungsfenster von 0 - 1,6 V auf.

(3) Herstellung einer weiteren elektrochemischen Zelle gemäß Variante 2 (nicht erfindungsgemäß)

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:

- 60 Gew.-% $Ni(OH)_2$,
- 8 Gew.-% Ruß als Leitmittel
- 30 Gew.-% Graphit als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:

- 87,5 Gew.-% Aktivkohle mit einer BET-Oberfläche > 900 $m^2/g$
- 10 Gew.-% einer $A_2B_7$-Legierung

- 2,5 Gew.-% eines wasserlöslichen Zelluloseethers als Binder

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 µm bis 100 µm aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung) und in einem Gehäuse aus vernickeltem Edelstahl verbaut, wie es in Fig. 1 dargestellt ist.

Die so hergestellte Zelle wies ein Spannungsfenster von 0,6 - 1,5 V auf.

(4) Herstellung einer elektrochemischen Zelle gemäß Variante 3 (nicht erfindungsgemäß)

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:

- 80 Gew.-% $Ni(OH)_2$,
- 4 Gew.-% Kobalt-Pulver als Leitmittel
- 14 Gew.-% Nickel-Pulver als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:

- 20 Gew.-% Aktivkohle mit einer BET-Oberfläche > 900 $m^2/g$
- 74,5 Gew.-% Eisenpartikel (zumindest teilweise zu $Fe(OH)_2$ oxidiert) mit einer mittleren Teilchengröße im Bereich von 100 nm bis 200 nm sowie
- 5 Gew.-% SBR als Binder
- 0.5 Gew.-% eines weitere wasserlöslichen CMC-Binders/-Verdickers

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 µm bis 100 µm aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung) und in einem Gehäuse aus vernickeltem Edelstahl verbaut, wie es in Fig. 1 dargestellt ist. Die so hergestellte Zelle wies ein Spannungsfenster von 0,6 - 1,5 V auf.

(5) Herstellung einer weiteren elektrochemischen Zelle gemäß Variante 3 (nicht erfindungsgemäß)

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:

- 60 Gew.-% $Ni(OH)_2$,
- 32 Gew.-% Aktivkohle

- 3 Gew.-% Ruß als Leitmittel
- 3 Gew.-% Ca(OH)2 als Additiv
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:

- 87,0 Gew.-% Aktivkohle mit einer BET-Oberfläche > 900 $m^2/g$
- 10 Gew.-% Eisenpartikel (zumindest teilweise zu $Fe(OH)_2$ oxidiert) mit einer mittleren Teilchengröße im Bereich von 100 bis 200 nm
- 2,5 Gew.-% eines wasserlöslichen SBR-Binders
- 0.5 Gew.-% eines weitere wasserlöslichen CMC-Binders/-Verdickers

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 $\mu$m bis 100 $\mu$m aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 $\mu$m) zu einem Elektroden-Separator-Verbund mit der folgenden Schichtsequenz kombiniert:

Hilfselektrode / negative Elektrode / Separator / positive Elektrode

Der Verbund wurde mit einem wässrigen Elektrolyten getränkt (6M KOH-Lösung) und in einem Gehäuse aus vernickeltem Edelstahl verbaut, wie es in Fig. 1 dargestellt ist.

Die so hergestellte Zelle wies ein Spannungsfenster von 0,6 - 1,5 V auf.

Figurenbeschreibungen

In **Fig. 1** ist schematisch der Aufbau einer Ausführungsform eines elektrochemischen Elements gemäß der vorliegenden Erfindung dargestellt, wie es sich nach obigen Ausführungsbeispielen herstellen lässt. In einem Gehäuse aus den Gehäuseteilen 1 und 2 ist ein Verbund aus einer positiven Elektrode 4, einem Separator 6 und einer negativen Elektrode 5 angeordnet. Das Gehäuse ist mittels der Dichtung 3 flüssigkeits- und gasdicht verschlossen. Auf die dem Separator abgewandte Seite der negativen Elektrode ist die Hilfselektrode 7 aufgewalzt. Mittels der Feder 8 sollen volumetrische Änderungen des Verbundes in Folge von Lade- und Entladevorgängen ausgeglichen werden.

In **Fig. 2** ist schematisch ein gemäß obigen Ausführungsbeispielen herstellbarer Elektroden-Separator-Verbund dargestellt. Eine schichtförmige positive Elektrode trägt das Bezugszeichen 4, eine schichtförmige negative Elektrode das Bezugszeichen 5, der Separator das Bezugszeichen 6 und eine schichtförmige Hilfselektrode das Bezugszeichen 7.

In **Fig. 3** ist schematisch ein alternativer Elektroden-Separator-Verbund einer Ausführungsform eines elektrochemischen Elements gemäß der vorliegenden Erfindung dargestellt. Eine schichtförmige positive Elektrode trägt auch hier das Bezugszeichen 4, eine schichtförmige negative Elektrode das Bezugszeichen 5, der Separator das Bezugszeichen 6 und eine schichtförmige Hilfselektrode das Bezugszeichen 7. Im Gegensatz zur Ausführungsform gemäß Fig. 2 ist die Hilfselektrode 7 hier zwischen der negativen Elektrode 5 und dem Separator 6 angeordnet.

In **Fig. 4** ist schematisch ein weiterer alternativer erfindungsgemäßer Elektroden-Separator-Verbund einer Ausführungsform eines elektrochemischen Elements gemäß der vorliegenden Erfindung dargestellt. Eine schichtförmige positive Elektrode trägt auch hier das Bezugszeichen 4, eine schichtförmige negative Elektrode das Bezugszeichen 5 und der Separator das Bezugszeichen 6. Allerdings sind auf zwei gegenüberliegenden Seiten der negativen Elektrode 5 Hilfselektroden mit den Bezugszeichen 7a und 7b angeordnet.

**Patentansprüche**

**1.** Sekundäre elektrochemische Zelle umfassend

1.1 eine negative Elektrode enthaltend

1.1.1 einen Stromableiter,

1.1.2 als kohlenstoffbasiertes Speichermaterial, das die Speicherung von elektrischer Ladung in der Elektrode durch Ausbildung einer elektrischen Doppelschicht (Helmholtz-Doppelschicht) ermöglicht, Aktivkohle mit einer BET-Oberfläche von mindestens 800 $m^2/g$,

1.2 eine positive Elektrode enthaltend

1.2.1 einen Stromableiter sowie

1.2.2 Nickelhydroxid und/oder Nickeloxyhydroxid,

1.3 einen porösen Separator, der die negative und die positive Elektrode voneinander trennt, sowie

1.4 einen wässrigen, alkalischen Elektrolyten, mit dem die Elektroden und der Separator getränkt sind und

1.5 ein Gehäuse, das die Elektroden, den Separator und den Elektrolyten umschließt, **dadurch gekennzeichnet, dass**

1.6 das kohlenstoffbasierte Speichermaterial in der negativen Elektrode in einem Anteil zwischen 90 und 99,9 Gew.-%, bezogen auf das Gesamtgewicht der negativen Elektrode in trockenem Zustand, abzüglich des Gewichts des Stromableiters, enthalten ist, und

1.7 das Gehäuse gas- und flüssigkeitsdicht ausgebildet ist, und

1.8 die positive Elektrode 0,1 - 10 Gew.-% eines Elektrodenbinders und 0,1 bis 90 Gew.-% eines Leitmittels, jeweils bezogen auf das Gesamtgewicht der negativen Elektrode in trockenem Zustand, abzüglich des Gewichts des Stromableiters, enthält.

2. Sekundäre elektrochemische Zelle nach Anspruch 1, **dadurch gekennzeichnet, dass** es eine mit der negativen Elektrode elektrisch verbundene Hilfselektrode zum Abbau eines gegebenenfalls in dem Gehäuse entstehenden Sauerstoffdrucks aufweist.

3. Sekundäre elektrochemische Zelle nach Anspruch 1 oder Anspruch 2, **dadurch gekennzeichnet, dass** die positive Elektrode eine geringere Kapazität aufweist als die negative Elektrode.

4. Sekundäre elektrochemische Zelle nach einem der vorhergehenden Ansprüche, **dadurch gekennzeichnet, dass** das Gehäuse gas- und flüssigkeitsdicht ausgebildet ist.

5. Sekundäre elektrochemische Zelle nach einem der vorhergehenden Ansprüche, **dadurch gekennzeichnet, dass** die negative Elektrode das kohlenstoffbasierte Speichermaterial in einem Anteil von mindestens 5 Gew.-% enthält, vorzugsweise in einem Anteil zwischen 5 Gew.-% und 100 Gew.-%, bevorzugt zwischen 5 Gew.-% und 25 Gew.-%, insbesondere zwischen 5 Gew.-% und 15 Gew.-%.

6. Sekundäre elektrochemische Zelle nach einem der vorhergehenden Ansprüche, **dadurch gekennzeichnet, dass** die positive Elektrode das Nickelhydroxid und/oder Nickeloxyhydroxid in einem Anteil zwischen 10 Gew.-% und 100 Gew.-%, bevorzugt zwischen 25 Gew.-% und 100 Gew.-%, insbesondere zwischen 50 Gew.-% und 100 Gew.-%, enthält.

7. Sekundäre elektrochemische Zelle nach einem der vorhergehenden Ansprüche, **dadurch gekennzeichnet, dass** die positive und/oder die negative Elektrode als Schichten ausgebildet sind, insbesondere mit einer Dicke zwischen 50 $\mu$m und 500 $\mu$m.

8. Sekundäre elektrochemische Zelle nach einem der vorhergehenden Ansprüche, **dadurch gekennzeichnet, dass** der wässrige Elektrolyt eine gelöste Hydroxidverbindung in einem Anteil zwischen 0,1 M und 10 M enthält und in bevorzugten Ausführungsformen eine Sulfatverbindung, insbesondere ein Alkali oder Erdalkalisulfat, aufweist, insbesondere in einer Konzentration zwischen 0,001 und 0,1 Gew.%.

## Claims

1. Secondary electrochemical cell comprising

1.1 a negative electrode comprising

1.1.1 an output conductor,

1.1.2 as carbon-based storage material that enables the storage of electrical charge in the electrode via formation of an electrical double layer (Helmholtz double layer), activated carbon having a BET surface area of at least 800 $m^2/g$,

1.2 a positive electrode comprising

1.2.1 an output conductor and

1.2.2 nickel hydroxide and/or nickel oxyhydroxide,

1.3 a porous separator that separates the negative and positive electrodes from one another, and

1.4 an aqueous alkaline electrolyte with which the electrodes and the separator are soaked and

1.5 a housing that encloses the electrodes, the separator and the electrolyte, **characterized in that**

1.6 the carbon-based storage material is present in the negative electrode in a proportion between 90% and 99.9% by weight, based on the total weight of the negative electrode in the dry state, minus the weight of the output conductor, and

1.7 the housing has a gas- and liquid-tight design, and

1.8 the positive electrode contains 0.1-10% by weight of an electrode binder and 0.1% to 90% by weight of a conduction medium, based in each case on the total weight of the negative electrode in the dry state, minus the weight of the output conductor.

**2.** Secondary electrochemical cell according to Claim 1, **characterized in that** it has an auxiliary electrode electrically connected to the negative electrode for dissipation of any oxygen pressure that arises in the housing.

**3.** Secondary electrochemical cell according to Claim 1 or Claim 2, **characterized in that** the positive electrode has a lower capacity than the negative electrode.

**4.** Secondary electrochemical cell according to any of the preceding claims, **characterized in that** the housing has a gas- and liquid-tight design.

**5.** Secondary electrochemical cell according to any of the preceding claims, **characterized in that** the negative electrode contains the carbon-based storage material in a proportion of at least 5% by weight, preferably in a proportion between 5% by weight and 100% by weight, preferably between 5% by weight and 25% by weight, especially between 5% by weight and 15% by weight.

**6.** Secondary electrochemical cell according to any of the preceding claims, **characterized in that** the positive electrode contains the nickel hydroxide and/or nickel oxyhydroxide in a proportion between 10% by weight and 100% by weight, preferably between 25% by weight and 100% by weight, especially between 50% and 100% by weight.

**7.** Secondary electrochemical cell according to any of the preceding claims, **characterized in that** the positive and/or negative electrodes take the form of layers, especially having a thickness between 50 μm and 500 μm.

**8.** Secondary electrochemical cell according to any of the preceding claims, **characterized in that** the aqueous electrolyte contains a dissolved hydroxide compound in a proportion between 0.1 M and 10 M and in preferred embodiments includes a sulfate compound, especially an alkali metal or alkaline earth metal sulfate, especially in a concentration between 0.001% and 0.1% by weight.

## Revendications

**1.** Cellule électrochimique secondaire, comprenant :

1.1 une électrode négative contenant :

1.1.1 un collecteur de courant,

1.1.2 en tant que matériau de stockage à base de carbone, qui permet le stockage d'une charge électrique dans l'électrode par formation d'une double couche électrique (double couche de Helmholtz), du charbon actif ayant une surface BET d'au moins 800 $m^2/g$,

1.2 une électrode positive contenant :

1.2.1 un collecteur de courant et
1.2.2 de l'hydroxyde de nickel et/ou de l'oxyhydroxyde de nickel,

1.3 un séparateur poreux, qui sépare l'électrode négative et l'électrode positive l'une de l'autre, ainsi que
1.4 un électrolyte alcalin aqueux, avec lequel les électrodes et le séparateur sont imprégnés, et
1.5 un boîtier qui entoure les électrodes, le séparateur et l'électrolyte, **caractérisée en ce que**
1.6 le matériau de stockage à base de carbone est contenu dans l'électrode négative en une proportion comprise entre 90 et 99,9 % en poids, par rapport au poids total de l'électrode négative à l'état sec, moins le poids du collecteur de courant, et
1.7 le boîtier est configuré sous forme étanche aux gaz et aux liquides, et
1.8 l'électrode positive contient 0,1 à 10 % en poids d'un liant d'électrode et 0,1 à 90 % en poids d'un conducteur, à chaque fois par rapport au poids total de l'électrode négative à l'état sec, moins le poids du collecteur de courant.

**2.** Cellule électrochimique secondaire selon la revendication 1, **caractérisée en ce qu'**elle comprend une électrode auxiliaire raccordée électriquement avec l'électrode négative, pour la suppression d'une pression d'oxygène éventuellement formée dans le boîtier.

**3.** Cellule électrochimique secondaire selon la revendication 1 ou la revendication 2, **caractérisée en ce que** l'électrode positive présente une capacité plus faible que l'électrode négative.

**4.** Cellule électrochimique secondaire selon l'une quelconque des revendications précédentes, **caractérisée en ce que** le boîtier est configuré sous forme étanche aux gaz et aux liquides.

**5.** Cellule électrochimique secondaire selon l'une quelconque des revendications précédentes, **caractérisée en ce que** l'électrode négative contient le matériau de stockage à base de carbone en une proportion d'au moins 5 % en poids, de préférence en une proportion comprise entre 5 % en poids et 100 % en poids, de préférence entre 5 % en poids et 25 % en poids, notamment entre 5 % en poids et 15 % en poids.

**6.** Cellule électrochimique secondaire selon l'une quelconque des revendications précédentes, **caractérisée en ce que** l'électrode positive contient l'hydroxyde de nickel et/ou l'oxyhydroxyde de nickel en une proportion comprise entre 10 % en poids et 100 % en poids, de préférence entre 25 % en poids et 100 % en poids, notamment entre 50 % en poids et 100 % en poids.

**7.** Cellule électrochimique secondaire selon l'une quelconque des revendications précédentes, **caractérisée en ce que** l'électrode positive et/ou l'électrode négative sont configurées sous la forme de couches, notamment d'une épaisseur comprise entre 50 $\mu$m et 500 $\mu$m.

**8.** Cellule électrochimique secondaire selon l'une quelconque des revendications précédentes, **caractérisée en ce que** l'électrolyte aqueux contient un composé d'hydroxyde dissous en une proportion comprise entre 0,1 M et 10 M et, selon des modes de réalisation préférés, un composé de sulfate, notamment un sulfate alcalin ou alcalino-terreux, notamment en une concentration comprise entre 0,001 et 0,1 % en poids.

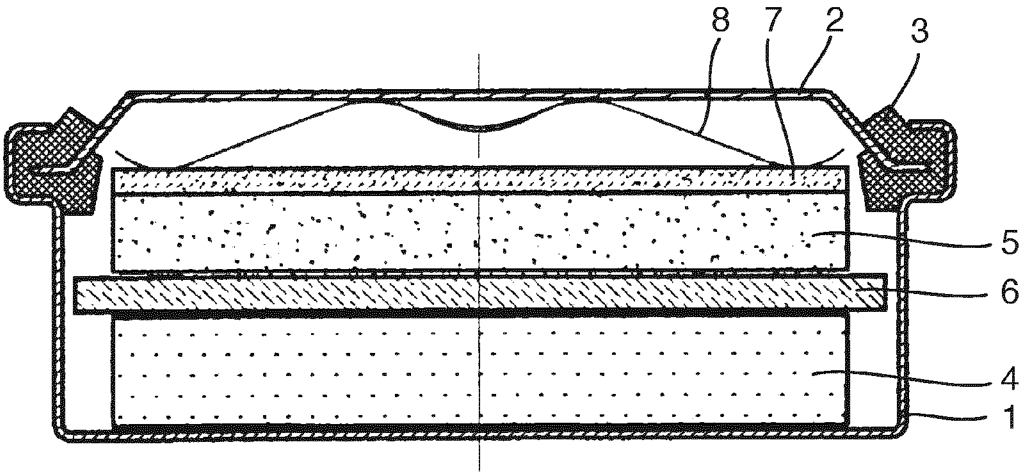


Fig. 1

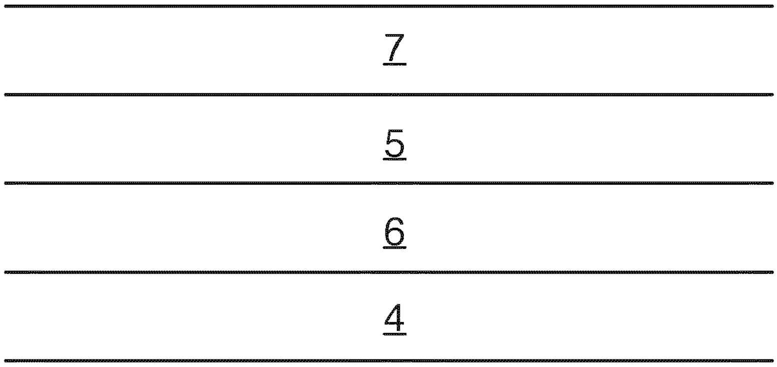


Fig. 2

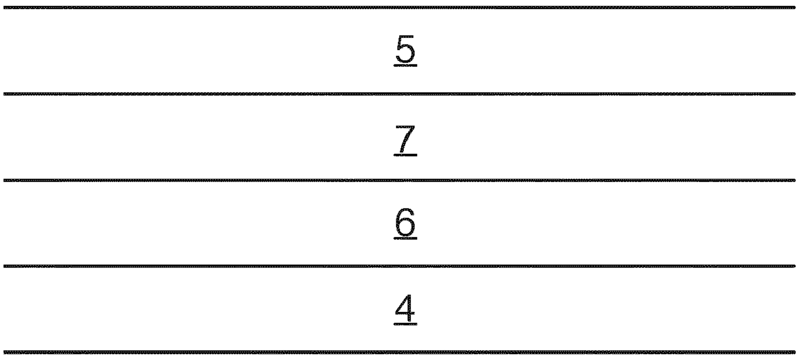


Fig. 3

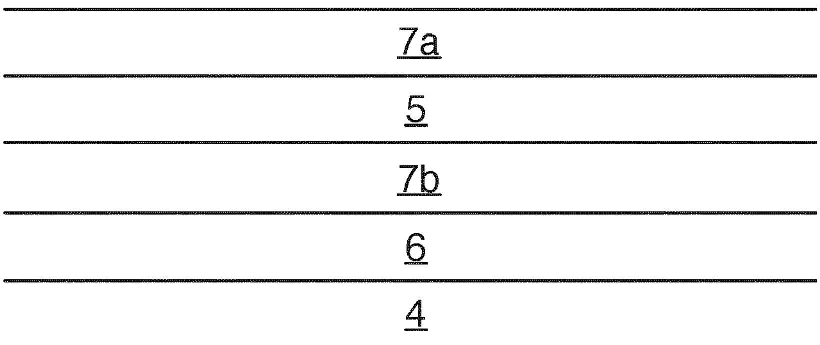


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1011163 A1
- DE 202004017545 U1
- JP 2012064590 A
- WO 03088374 A2
- EP 0419220 A1
- US 2006201801 A1
- EP 0218028 A1
- EP 0416244 A1
- EP 0658949 A1
- EP 1391947 A1